(19) **Europäisches Patentamt**

**European Patent Office**

**Office européen des brevets**

(11) Veröffentlichungsnummer : **0 371 519 B1**

(12) # EUROPÄISCHE PATENTSCHRIFT

(45) Veröffentlichungstag der Patentschrift :
**22.07.92 Patentblatt 92/30**

(21) Anmeldenummer : **89123917.0**

(22) Anmeldetag : **10.01.87**

(51) Int. Cl.⁵ : **B30B 11/20**

(54) **Würfelpresse.**

(30) Priorität : **24.01.86 CH 287/86**

(43) Veröffentlichungstag der Anmeldung :
**06.06.90 Patentblatt 90/23**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**EP-A- 0 101 614**
**EP-A- 0 238 147**
**EP-A- 0 246 710**
**DE-B- 1 208 543**
**NL-A- 8 600 523**
**US-A- 3 899 956**

(60) Veröffentlichungsnummer der früheren
Anmeldung nach Art. 76 EPü : **0 231 764**

(73) Patentinhaber : **BUEHLER AG**
**CH-9240 Uzwil (CH)**

(72) Erfinder : **Groebli, Werner**
**Eisenbahnweg 19**
**CH-9230 Flawil (CH)**
Erfinder : **Hegelbach, Hugo**
**Weingarten**
**CH-Busswil (CH)**
Erfinder : **Schaffner, Hanspeter**
**Armetsholzstrasse 2**
**CH-9244 Niederuzwil (CH)**

(74) Vertreter : **Révy von Belvárd, Peter**
**Im Lindengarten 18**
**CH-9242 Oberuzwil (CH)**

Jouve, 18, rue Saint-Denis, 75001 PARIS

## Beschreibung

Die Erfindung betrifft eine Würfelpresse, auch Pelletpresse genannt, mit einer mit Bohrungen versehener Pressform und mit Pressrollen, die das zwischen ihnen und der Pressform erfasste Produkt durch die Bohrungen hindurch pressen, und mit einer Verstellvorrichtung für das Einstellen des Abstandes zwischen einer Pressrolle und der Pressform.

Es ist bekannt, den Spalt zwischen der Pressform in Funktion eines Parameters der Würfelqualität über die Maschinenregelung zu steuern (EP-A1 0 040 406). Es ist ebenso bekannt, Verstellvorrichtungen für Pressrollen vorzusehen, die aber zumeist erst nach Abstellen der Presse betätigt werden können.

Die Erfindung hat zum Ziel, mit einfachen Mitteln ein einwandfreies Positionieren der Pressrollen zu erreichen, das von aussen gesteuert werden kann, ohne die Presse stillsetzen zu müssen, z.B durch Eingabe eines Soll-Wertes bzw. durch Regelung in Funktion von Betriebsparametern. Dies gelingt durch die Ausbildung gemäss Anspruch 1. Damit werden diese Leitungen durch die Rotation dieses Rollenträgers nicht beeinträchtigt, was bei einer Überlastung der Presse geschieht, wenn der Brechbolzen, der diesen Rollenträger gegen eine Rotation sichert, bricht. Es ist möglich, die Lage der Pressrollen auch nach einem Bruch von aussen zu steuern, insbesondere um ein Blockieren einfacher zu beheben.

Den letzteren Vorteil erreicht man auch, wenn die Verstelleinrichtung an der Türe, ausserhalb des Arbeitsraumes der Presse angeordnet ist. Die Zugänglichkeit dieser insbesondere als Zylinder-Kolben-Einheit ausgebildeten Verstelleinrichtung wird für die Wartung verbessert.

Besonders bevorzugt ist die Ausbildung nach Anspruch 2. In der EP-A2 0 101 614 ist zwar eine Würfelpresse dargestellt, deren Verstellvorrichtung mit einer Vorrichtung zur Lagemessung der Pressrolle zusammenarbeitet. Diese Würfelpresse weist eine flache, horizontale Pressform auf, die am Pressengestell befestigt ist. Die Pressrollen sind auf horizontalen Achsen angeordnet, die an einem Tragkopf befestigt sind. Der Tragkopf ist auf einer vertikalen, vom Pressenmotor angetriebenen Welle drehfest, aber axial verschiebbar angebracht. Am Tragkopf ist mindestens eine vertikale dreieckige Messfahne auf einem radialen Arm angebracht. Am Maschinengestell ist ein berührungsfreier Sensor befestigt, der durch das Vorbeigehen der Messfahnen aktiviert wird. Die Dauer des Vorbeigehens der Messfahne am Sensor ist ein Mass für die axiale Lage des Tragkopfes auf der Antriebswelle und somit des Abstandes der Pressrolle zur Pressform. Dieses Mass kann die Pressenregelung beeinflussen und/oder er kann selber durch die Pressenregelung gesteuert werden. Weil die Messfahnen am Tragkopf und der Sensor am Maschinengestell befestigt sind, besteht die Möglichkeit einer unerwünschten Beeinflussung des Sensors durch das Produkt statt durch die Messfahne. Die Dauer des Vorbeigehens der Messfahne am Sensor hängt nicht nur von der axialen Lage des Tragkopfes auf die Antriebswelle ab, sondern auch von der Drehzahl dieser Antriebswelle, was die Regelung kompliziert macht.

Die erfindungsgemässe Würfelpresse vermeidet dieses Problem durch die Ausbildung nach Anspruch 3 auf erstaunlich einfache Art. Damit ist dieser Lageregler vor Störungen durch das Produkt oder durch den Einfluss anderer Pressenteile geschützt.

Zum Erreichen und Einhalten einer genauen Lage wird der Kolben vorzugsweise doppelt wirkend ausgeführt. Dies hat gegenüber Kolben mit mechanischen Gegenkraftelementen, wie z.B. Federn, den Vorteil, dass keine Weg-Kraft-Abhängigkeit vorhanden ist.

Je nach Konstruktion der Würfelpresse kann die Zylinder-Kolben-Einheit die Pressrolle direkt in eine vorwiegend radiale Richtung verstellen. In den meisten Fällen greift sie aber auf den Exzenterbolzen, der zur Lagerung und Verstellung der Pressrolle dient. Hiezu ist vorteilhaft die Ausbildung gemäss Anspruch 10 vorgesehen, die eine grobe Voreinstellung erlaubt.

Es ist möglich, für jede Pressrolle eine Verstelleinrichtung vorzusehen, wie dies Anspruch 8 unter Schutz stellt, aber auch eine solche auf mehrere Pressrollen wirken zu lassen.

Die Zeichnung zeigt schematisch als Beispiel verschiedene Ausführungsformen der Erfindung.

Fig. 1 ist ein Schnitt entlang der Linie I-I der Fig. 2 durch den Arbeitsraum einer erfindungsgemässen Würfelpresse, ohne die Zylinder-Kolben-Einheit für die Verstellung der Pressrollen.

Fig. 2 ist eine noch stärker schematisierte Ansicht in grösserem Massstab in Richtung des Pfeiles II der Fig. 1. Die Projektionsebene ist vertikal und der Beobachter blickt auf die Frontseite der Maschine bei offener Türe.

Fig. 3 ist ein Schnitt in noch grösserem Massstabe durch die Kolben-Zylinder-Einheit der Fig. 2 mit einem elektrohydraulischen Schema für die Regelung der Lage des Kolbens.

Fig. 3A ist ein Axialschnitt durch eine abgewandelte Ausführungsform der Pelletpresse mit ausserhalb des Arbeitsraumes, an der Türe des Maschinengehäuses angeordneter Verstelleinrichtung, wogegen

Fig. 3B eine Ausführungsvariante ähnlich Fig. 2, jedoch mit einer Schraubenspindel an Stelle der Zylinder-KolbenEinheit zur Verstellung der Pressrollen zeigt.

Fig. 4 ist eine der Fig. 2 entsprechende Ansicht einer weiteren Ausführungsform der Erfindung.

Fig. 5 ist ein Schnitt in grösserem Massstab durch eine Kolben-Zylinder-Einheit der Fig. 4.

Fig. 6 ist eine vertikale Ansicht von vorne auf eine Würfelpresse nach einer anderen Ausführungsform der Erfindung.

Fig. 7 ist ein Schnitt auf den Arbeitsraum einer Würfelpresse nach einer sechsten Ausführungsform, in einer Ansicht entsprechend jener der Fig. 1.

Fig. 8 ist ein Schema der in Fig. 3 angedeuteten, und auch im Zusammenhang mit der Kolben-Zylinder-Einheit der Fig. 5 verwendbaren Maschinenregelung, wobei die für die Erfindung wesentlichen Steuerungsteile in ihrem Zusammenhang mit einer Pressensteuerung bekannter Bauart dargestellt sind.

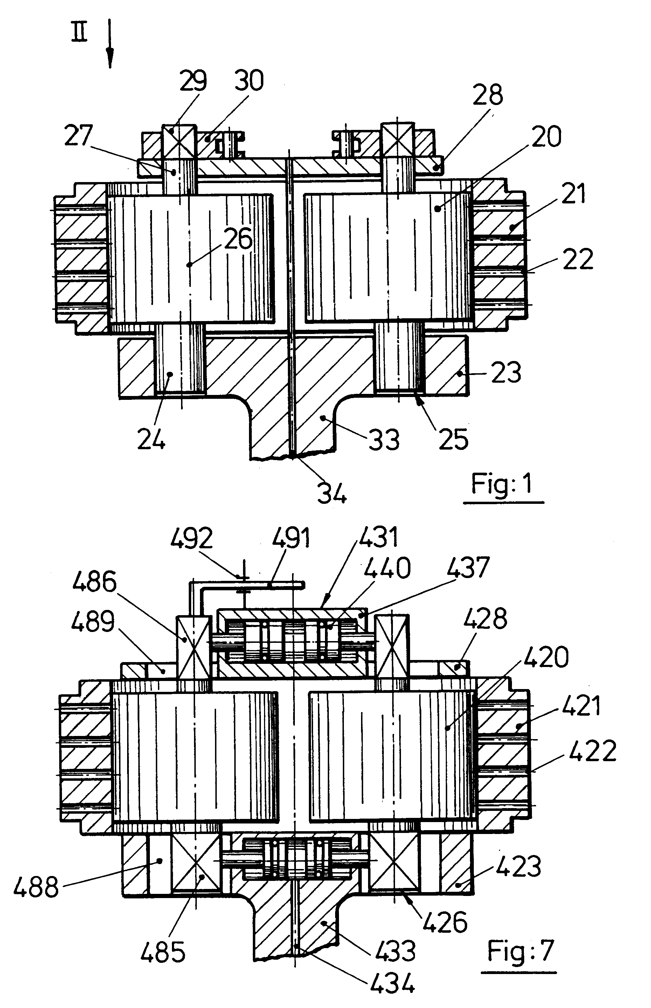

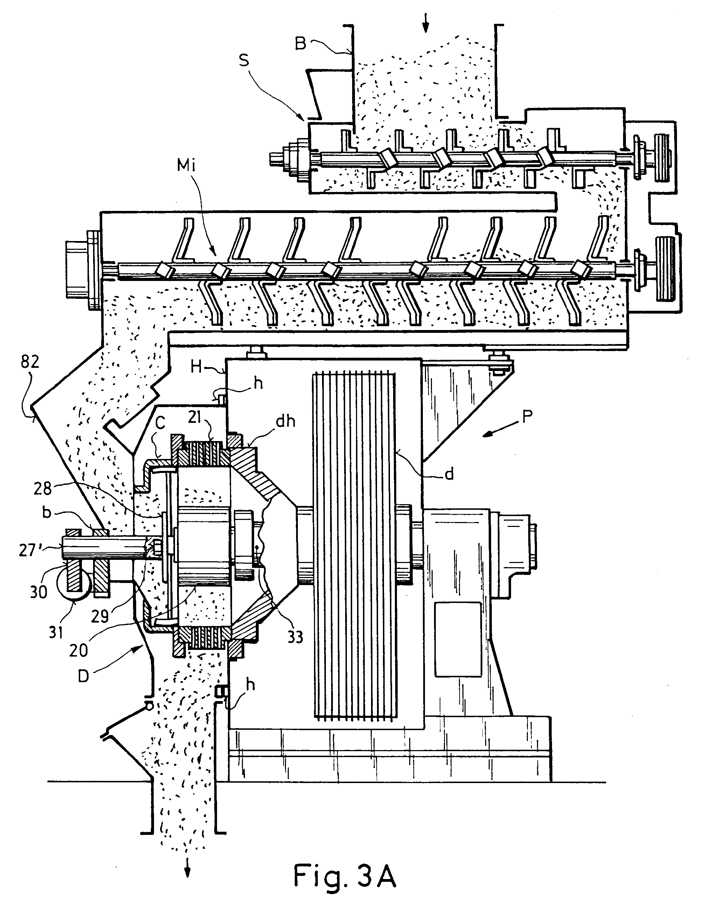

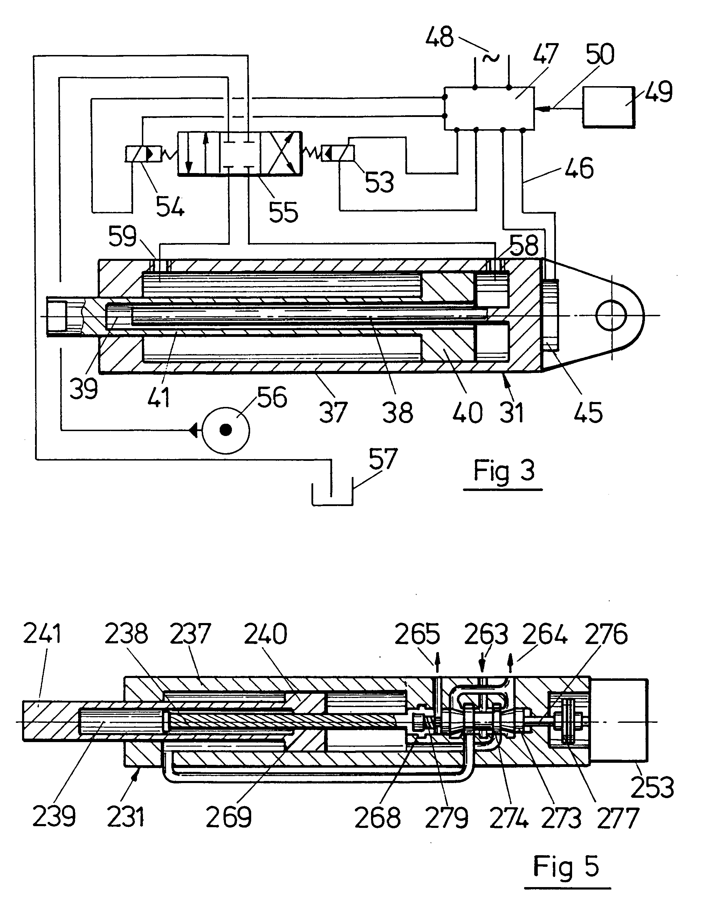

Pressrollen 20 (Fig. 1) sind in einer ringförmigen Pressform 21 angeordnet, welche Pressbohrungen 22 aufweist. Die Pressform 21 ist mit einem aus Fig. 3A ersichtlichen rotierenden Pressformhalter dh fest verbunden. Ein fest angeordneter Rollenträger 23 dient der Lagerung der zylindrischen Füsse 24 von Exzenterbolzen 25. Diese Exzenterbolzen 25 haben eine gegenüber diesem Fuss 24 exzentrische Lagerspindel 26 für die Pressrollen 20 und einen zum Fuss 24 koaxial angeordneten Fortsatz 27. Die Fortsätze 27 der Exzenterbolzen 25 sind in einem sie verbindenden, durch nicht dargestellte Stehbolzen am Rollenträger 23 befestigten Rollensteg 28 drehbar angeordnet.

Die Fortsätze 27 werden je mit einen Sechskant 29 zum drehfesten Anbringen eines Hebels 30 versehen. Zwischen den Hebeln 30 ist eine Zylinder-Kolben-Einheit 31 angelenkt. Der Rollenträger 23 ist an einer horizontalen, fest angeordneten Tragwelle 33 befestigt. An ihrer anderen, nicht dargestellten, Seite ist die Tragwelle 33 im Maschinengestell gelagert und durch einen Brechbolzen drehfest gehalten. In der Tragwelle 33 sind weitere hydraulische Leitungen 34 sowie nicht dargestellte elektrische Leitungen (sowie Schmierleitungen) vorgesehen, die auf der nicht dargestellten Seite der Tragwelle 33 über Drehanschlüsse mit den hydraulischen und elektrischen Steuerungsteilen verbunden sind.

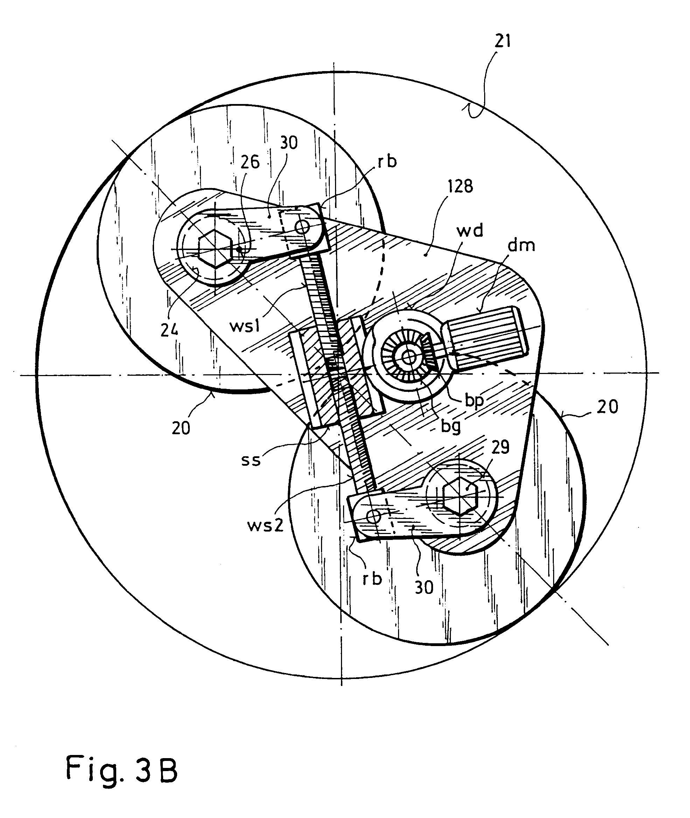

Im Zylinder 37 (Fig. 3) der Zylinder-Kolben-Einheit 31 ist eine Messstange 38 befestigt, die in geringem Abstand mit einer Messbohrung 39 des doppeltwirkenden Kolbens 40 und seiner Kolbenstange 41 zusammenwirkt. Die genaue axiale Lage des Kolbens 40 wird durch eine Wegmesselektronik 45 gemessen und durch eine Rückführung 46 einem Lageregler 47 als Ist-Wert rückgeführt. Dieser Lageregler 47 ist an eine elektrische Speisung 48 angeschlossen und erhält den Sollwert aus der Maschinenregelung 49 über eine Sollwerteingabe 50.

Am Lageregler 47 sind zwei Steuerventile 53, 54 angeschlossen, die ein Vierwegventil 55, das mit einer mittleren Absperrposition versehen ist, betätigen. Das Vierwegventil 55 ist an eine Pumpe 56, oder an einer anderen Druckmedienquelle, am Tank 57 sowie an den Anschlüssen 58, 59 des Zylinders 37 auf den beiden Seiten des doppeltwirkenden Kolbens 40 angeschlossen. Als Steuerventile 53, 54 können je nach den Anforderungen an die Regelung Digitalventile, Proportionalventile oder Servoventile verwendet werden.

Wenn der Ist-Wert dem Soll-Wert entspricht, so bleibt das Vierwegventil 55 in der dargestellten mittleren Absperrposition. Ist der Abstand zwischen den Pressrollen 20 und der Pressform 21 zu gross, dann schaltet der Lageregler 47 das Steuerventil 53 ein. Damit verbindet das Vierwegventil 55 die Pumpe 56 mit dem Anschluss 58. Durch die Bewegung des Kolbens 40 und der Kolbenstange 41 verlängert sich die Zylinder-Kolben-Einheit 31 und die Hebel 30, die um die Achse des jeweiligen Fusses 24 bzw. Fortsatzes 27 drehen, verstellen die Exzenterbolzen 25 und mit ihnen die Pressrollen 20 in Richtung der Pressform 21, bis der Sollwert wieder erreicht ist. Dann schaltet der Lageregler 47 das Steuerventil 53 ab, und das Vierwegventil 55 kommt wieder in die mittlere Absperrposition.

Ist der Abstand der Pressrollen 20 zur Pressform 21 zu klein, dann schaltet der Lageregler 47 das Steuerventil 54 ein, das die Pumpe 56 mit dem Anschlusse 59 der Zylinder-Kolben-Einheit 31 verbindet, so dass die Pressrollen 20 in analoger Weise von der Pressform 21 entfernt werden.

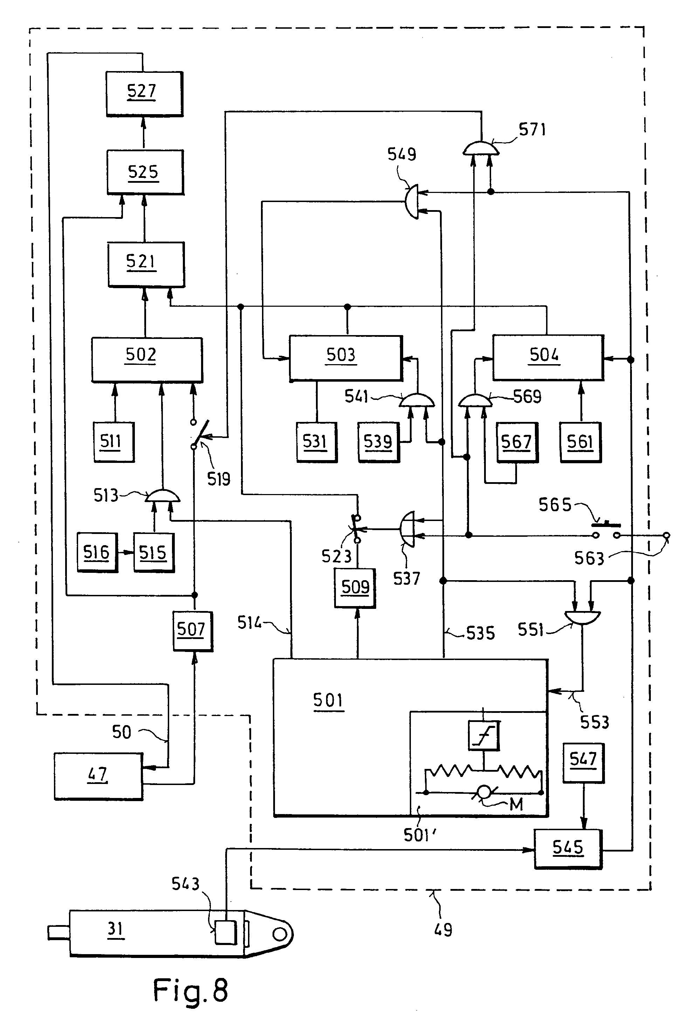

Bei den weiteren Ausführungsformen besitzen Teile gleicher oder ähnlicher Funktion die gleichen Bezugszeichen wie bei der ersten Ausführungsform, jedoch mit einer Hunderterziffer. Diese Verwandschaft gilt naturgemäss nicht für die Numerierung der Steuerungsteile im Schema der Fig. 8.

In Fig. 3A ist die Pelletpresse in einem Axialschnitt dargestellt. Es ist ersichtlich, dass das zu verpressende Material aus einem Einfülltrichter B in einen Förder- und Dosierapparat S und von dort in einen Mischer Mi gelangt. Diese beiden Apparate stehen an der Oberseite eines Gehäuses H der eigentlichen Pelletpresse P, wobei der Ausgang des Mischers Mi in einen abgeknickten Einfüllkasten 82 fördert, der darunter angeordnet, jedoch mit dem Mischer Mi nicht starr verbunden ist. Die Unterseite des Einfüllkastens 82 mündet nämlich durch eine an Scharnieren h schwenkbar aufgehängte Türe D hindurch in einen Formdeckel C und ist mit dieser Türe D verschwenkbar.

Ein Antriebsrad d dient dazu, einen Formhalter dh in Drehung zu versetzen, während gleichzeitig die Tragwelle 33 für die Press rollen 20 in ihren Lagern (rechts in Fig. 3A) fixiert ist und so nur die Rolle einer Drehachse für den Formhalter dh spielt. Es ist aber bereits vorgeschlagen worden, die Pressrollen zu drehen, während die Form 21 stillsteht, und es sei darauf hingewiesen, dass es für die Zwecke der vorliegenden Erfindung lediglich wesentlich ist, dass eine Relativbewegung zwischen Form 21 und Pressrollen 20 stattfindet, was theoretisch auch durch entgegengesetzte Drehung dieser beiden Teile erreicht werden könnte.

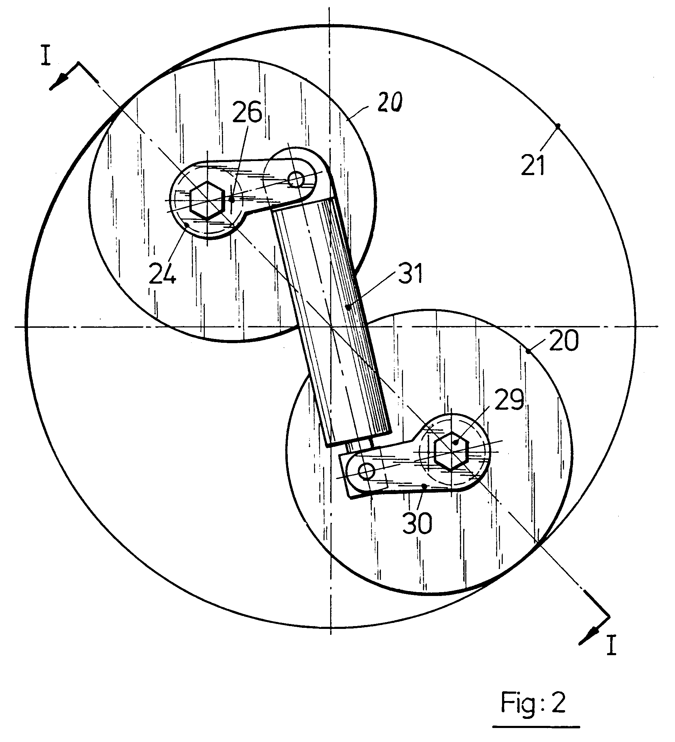

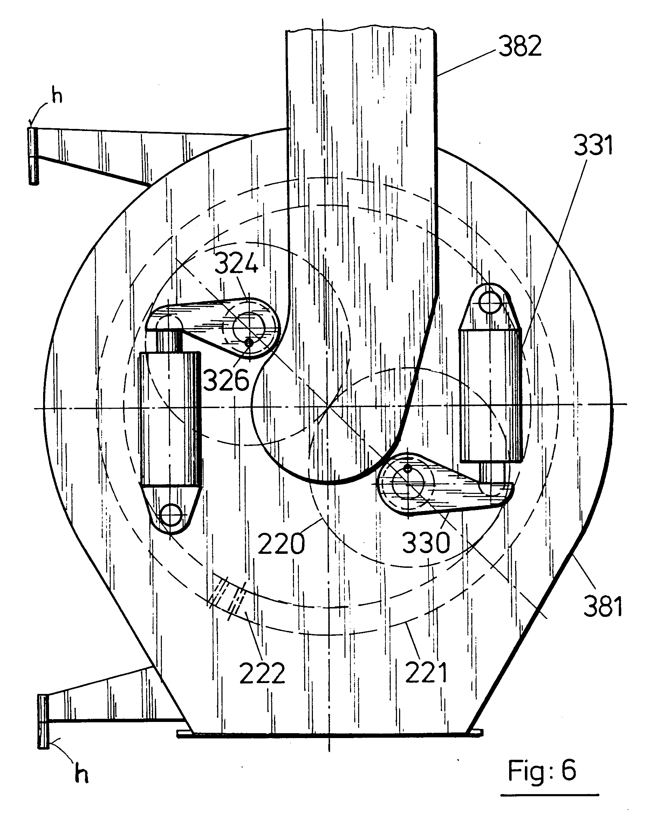

Bei dieser Ausführungsform ist die Verstelleinrichtung in Form der Zylinder-Kolben-Einheit 31 zur Verbesserung der Zugänglichkeit an der Aussenseite der Türe und damit ausserhalb des Arbeitsraumes der Pelletpresse P angeordnet. Hiezu ist mit dem an Hand der Fig. 1 bis 3 beschriebenen Sechskant 29 eine Verlängerungswelle 27' drehfest gekuppelt (Klauenkupplung), die an der Aussenseite der Türe D in einem mit der Türe D fest verbundenen Lagerblock b gehalten ist und an ihrem Ende den Hebel 30 trägt. Die Zylinder-Kolben-Einheit 31 kann dann ebenfalls am Lagerblock b befestigt werden. Eine Variante dieser Ausführung mit an der Aussenseite der Türe angeordneter Verstelleinrichtung ist in einer Frontansicht der Fig. 6 zu entnehmen.

Es ist aber nicht unbedingt erforderlich, als Verstelleinrichtung eine Zylinder-Kolben-Einheit zu verwenden, wie an Hand der Fig. 3B veranschaulicht wird. Hier ist mit den Enden der Hebel 30 je ein Spurlager rb gelenkig verbunden, in dem jeweils das Ende einer Schraubspindel ws1 bzw. ws2 axial unverschieblich, aber drehbar gelagert ist. Wie ersichtlich, besitzt jede Schraubspindel ws1 bzw. ws2 eine der anderen entgegengesetzte Gewinderichtung. Beide Schraubspindeln ws1, ws2 sind an den einander zugekehrten Enden in eine Schraubhülse ss eingeschraubt, die jeweils bis zur Hälfte ihrer Länge reichende, ebenfalls einander entgegengesetzte und den Gewinden der Spindeln ws1, ws2 entsprechende Innengewinde besitzt. An ihrer Aussenseite ist die Schraubhülse ss als Schraubenrad ausgebildet, das mit einem Antriebsrad wd im Eingriff steht. Das Antriebsrad wd ist zusammen mit einem gleichachsigen Kegelrad bg am Pressrollensteg 128 gelagert, an dem auch ein Antriebsmotor dm befestigt ist, dessen Kegelritzel bp mit dem Kegelrad bg in Eingriff steht.

Es versteht sich, dass die Verstelleinrichtung auf die verschiedenste Weise ausgebildet sein kann. Im Falle der Fig. 3B wird es sich empfehlen, den über die Leitungen 34 (Fig. 1) versorgten Motor dm als Schrittmotor auszubilden, wobei aus der Anzahl der Schritt von einer Endlage aus auch die Position der Pressrollen 20 für das Regelsystem bekannt ist. Beim Einschalten der Pelletpresse kann der Schrittmotor - wie es von anderen Schrittmotorsteuerungen (z.B. für Schreibmaschinen oder Glücksspielautomaten) bekannt ist - erst durch ein nicht flüchtiges Programm in die Endlage gebracht werden, wobei die dazu nötigen Schritte in einem Zähler gezählt werden, worauf die Drehrichtung des Motors dm umgekehrt wird und er sich so lange dreht, bis der Zähler wieder auf Null gebracht ist. In diesem Augenblick hat der Motor seine Ausgangslage erreicht, die er einnahm, bevor die Pelletpresse eingeschaltet wurde.

Es versteht sich ferner, dass an Stelle zweier Spindeln ws1, ws2 auch eine einzige vorgesehen sein könnte, wobei an Stelle der Lager rb dann Schraubhülsen vorzusehen sind, in die die Spindel sich mehr oder weniger einschraubt. In der Mitte der Spindel kann dann ein Schraubenrad an Stelle der Hülse ss vorgesehen sein.

Bei der vierten Ausführungsform ist nicht der Abstand jeder Pressrolle 20 zur Pressform 21 einzeln geregelt, sondern die Summe dieser Abstände. Diese Lösung hat den Vorteil eines kleinen apparativen Aufwands, weil eine einzige Zylinder-Kolben-Einheit 31 für die Regelung der beiden Pressrollen 30 genügt. Wenn sich die gespiesene Produktmenge ungleich zwischen den beiden Pressrollen 20 teilt, stellt sich das Verhältnis der beiden Abstände zueinander automatisch ein, und die Anstellkraft bleibt bei beiden Pressrollen gleich, was eine gleichmässige Abnützung verursacht und die Uebertragung von nicht kompensierten Anpresskräften auf den Formträger vermeidet.

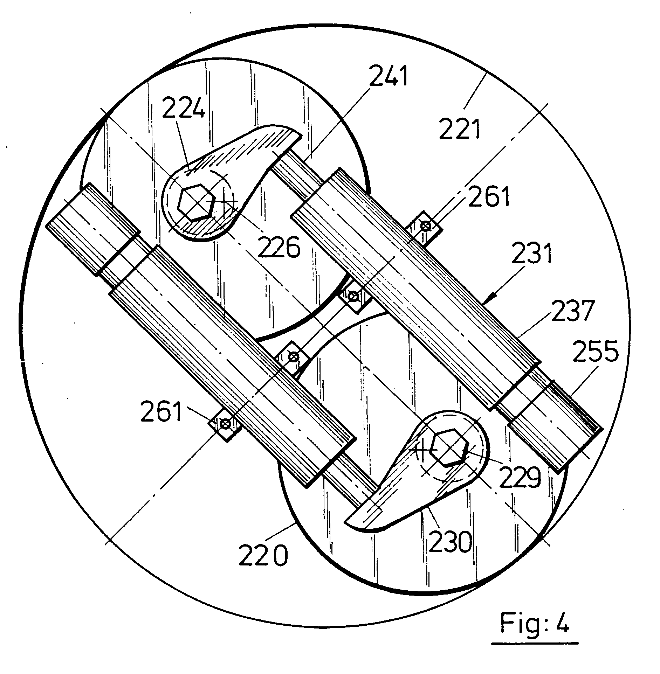

In manchen Fällen ist es aber erwünscht, den Abstand von jeder Pressrolle zur Pressform genau zu regeln, was mit der zweiten Ausführungsform (Fig. 4), möglich ist. Für jede Pressrolle 220 ist eine besondere Zylinder-Kolben-Einheit 231 vorgesehen, die über Befestigungslappen 261 mit Schrauben an den nicht dargestellten Rollensteg befestigt ist.

Das Vierwegventil 255 ist am Zylinder 237 angebaut (Fig. 5), und somit in der Zylinder-Kolben-Einheit 231 integriert. Der Eingang 263 ist mit der Pumpe und der Ausgang 264 mit dem Tank verbunden. Der Leckölausgang 265 geht zum Tank.

In eine Bohrung 239 der Kolbenstange 241 dringt eine Schraubenspindel 238 grosser Steigung, deren axiale Lage durch ein axiales Lager 268 bestimmt ist und konstant bleibt. Die Schraubenspindel 238 wirkt mit einem Muttergewinde 269 im gegen Drehung gesicherten doppelt wirkenden Kolben 240 zusammen, so dass bei einer axialen Betätigung des Kolbens 240 die Schraubenspindel 238 sich um einen genau entsprechenden Winkel dreht. Die Sicherung des Kolbens 240 gegen Verdrehen kann auf vielfältige Art beim äusseren Teil der Kolbenstange 241 geschehen.

Ein Ventilkörper 273 weist zwei Flanschen 274 mit Steuerkanten auf, die in der mittleren Lage alle Ein- bzw. Ausgänge 258, 259, 263, 264 gegeneinander absperren. Am Ventilkörper 273 ist eine Stange 276 befestigt, die über eine drehfeste aber axial elastische Kupplung 277 mit einem Schrittmotor 253 verbunden ist, der durch den Lageregler in die gewünschte Richtung gesteuert wird oder stillsteht. Am Ventilkörper 273 ist noch eine Schraube 279 kleiner Steigung befestigt, die mit einem nicht bezeichneten Muttergewinde in der axial festgehaltenen Schraubenspindel 238 zusammenwirkt.

Bei der in Fig. 5 dargestellte Lage sei zunächst angenommen, dass der Kolben 240 in der richtigen Lage ist, und der Schrittmotor somit stillsteht. Soll z.B. die Kolbenstange 241 ausgezogen werden, wird der Schrittmotor 253, und mit ihm der Ventilkörper 273 um den gewünschten Winkel gedreht, und die Schraube 279 schraubt sich um eine bestimmte Länge aus dem am Ende der axial festgehaltenen Schraubenspindel 238 angebrachten Muttergewinde aus. Der Ventilkörper 273 bewegt sich um die gleiche Länge nach rechts und verbindet den Eingang 263 von der Pumpe mit dem Eingang 258 auf der rechten Seite des Kolbens 240. Gleichzeitig wird der Eingang 259 auf der linken Seite des Kolbens 240 mit dem Ausgang 264 zum Tank verbunden. Der Kolben 240 bewegt sich nach links und die Mutter 269 dreht die Schraubenspindel 238 um den entsprechenden Winkel. Damit wird die Schraube 279 wieder in die axial festgehaltene Spindel 238 eingeschraubt und der Ventilkörper 273 wird nach links gezogen, bis die Flanschen 274 mit Steuerkante die Ein- bzw. Ausgänge 258, 259, 263, 264 wieder sperren, so dass der Kolben 240 stillsteht.

Mit einer solchen Vorrichtung ist es einfach, die Abnützung zu kompensieren. Bei einer angenommenen Abnützung der Paarung Pressrolle - Pressform von 2 mm bei einer Betriebsdauer von 100 Stunden, und einer Auflösung der Längsvorrichtung 238, 279 von 0,01 mm pro Schritt des Schrittmotors 253, muss die Maschinenregelung jede halbe Stunde den Soll-Wert um einen Schritt verstellen. Schon diese Betriebsweise allein, ohne weitere Regelung des Abstandes der Pressrolle 220 zur Pressform 221 bringt eine beträchtliche Verbesserung. Statt der Betriebsdauer kann man in die Maschinenregelung die gemessene verarbeitete Menge Produkt eingeben, die ein noch genaueres Mass der Abnützung ergibt. In diesem Zusammenhang sind noch Einzelheiten der Maschinensteuerung 49 beim Schema der Fig. 8 zu sehen, die weiter unten besprochen werden.

In der Fig. 4 ist eine einseitige Anlenkung der Kolbenstangen 241 an den Hebeln 230 gezeigt. Das zwischen den Pressrollen 220 und der Pressform 221 eingezogene Produkt übt auf die Pressrollen 220 Kräfte, die diese Pressrollen 220 von der Pressform 221 entfernen wollen, und die durch die Zylinder-Kolben-Einheiten 231 aufgenommen werden.

Bei den beiden ersten Ausführungsformen sind Zylinder-Kolben-Einheiten im Pressraum angeordnet und kommen in Kontakt mit dem Produkt. Daraus entstehen aber normalerweise keine Störungen. Wenn aber sehr strenge Bedingungen für die Reinheit des Produktes einzuhalten sind, ist es nach der dritten Ausführungsform der Erfindung möglich, die Zylinder-Kolben-Einheiten 331 auf der Aussenseite der Türe 381 (Fig. 6) anzulenken. Um die Hebel 330 am gewünschten Ort anbringen zu können, ist der Speisekasten 382 seitlich leicht versetzt angeordnet. Die Füsse 324 der Exzenterbolzen sind in der Türe selber gelagert. Die Fortsätze für das Anbringen der Hebel 330 sind auf der Frontseite der Füsse 24 angebracht und die Lagerspindel für die Pressrollen 320 auf der hinteren Seite dieser Füsse 324. In einer Variante kann die Zylinder-Kolben-Einheit 331 durch eine elektronisch angetriebene Spindel ersetzt werden, weil es keinen Kontakt mit dem Produkt gibt.

Bei den drei ersten Ausführungsformen müssen die Hebel 30, 230, 330 auf den Sechskanten 29, 229 umgesteckt werden, wenn die Abnützung ein gewisses Mass erreicht hat. Dank diesem Umstecken kann wieder ein optimales Zusammenwirken der Kolbenstangen 41, 241, 341 mit den Hebeln 30, 230, 330 erreicht werden. Bei der vierten Ausführungsform kann dank einer radialen Verstellung der Presskolben ein grösserer Weg gefahren werden, ohne umzustellen. Ferner ist das Verhältnis zwischen dem Weg der Kolben und dem Weg der Pressrollen linear, was die Programmierung der Steuerung vereinfachen kann.

Die Pressrollen 420 (Fig. 7) sind jeweils auf einer Lagerspindel 426 gelagert, die in einem vierkantigen Kopf 485 bzw. 486 endet. Auf diese Köpfe 485, 486 drücken die doppelt wirkenden Kolben 440 in Richtung der Pressform 421. Die Zylinder 437 der Zylinder-Kolben-Einheiten 431 sind mit dem Rollenträger 423 bzw. mit dem Rollensteg 428 integriert. Die Köpfe 485, 486 gleiten in radialen Führungen 488, 489 des Rollenträgers 423 bzw. des Rollenstegs 428. Am Vierkant 492 ist eine Stange 491 angebracht, die in einem Wegmesser 492 gleitet.

Beim Schema der Fig. 8 enthält die Maschinensteuerung 49 eine Pressensteuerung 501, die an sich bekannter Bauart sein kann und eine Überwachungsschaltung 501′ für die Überlastung des Pressenmotors M für den Antrieb der Form 21 und/oder der Pressrollen 20 enthält. Eine solche Schaltung ist beispielsweise aus der US-PS 3,932,736 bekannt geworden, auch sind Funktion und Wirkung der Pressensteuerung 501 der EP-A 0 040 406 zu entnehmen. Dabei wird bei Überlastung wenigstens die Pressenspeisung (Dosierer S in Fig. 3A) unterbrochen, gegebenenfalls auch die Stromzufuhr zum Motor M der Presse selbst, dessen Stromaufnahme mittels des Stromkreises 501′ überwacht wird. Für die Steuerung der Lage der Pressrollen sind drei Speicher vorgesehen. Ein Speicher 502 für die Null-Lage der Pressrollen, d.h. beim Abstand Null zwischen Pressrollen und Pressform gibt ständig den gespeicherten Wert weiter. Während des normalen Betriebes der Presse ist die Ausgabe der Werte aus einem Programmspeicher 503 gesperrt, der ein zeitgesteuertes Programm für den Soll-Abstand der Pressrollen nach einer Ueberlast enthält. Ebenfalls gesperrt während des normalen Betriebes der Presse sind die in einem Programmierspeicher 504 enthaltenen Werte eines zeitgesteuerten Programms für das automatische Messen der Null-Lage der Pressrolle bei sauberer Form.

Eine Anzeige 507 zeigt den Ist-Wert der Lage der Pressrollen (Ist-Lage), die vom Lageregler 47 gemeldet wird. Eine Anzeige 509 zeigt den Soll-Wert des Abstandes der Pressrollen von der Form (Soll-Abstand). Dieser Soll-Abstand wird durch die Pressensteuerung 501 aufgrund des momentanen technologischen Zustandes der Würfelpresse durch die Pressensteuerung 501 berechnet und gemeldet. Unter Lage der Pressrollen ist die Lage der Achse ihrer Lagerspindel 26 (Fig. 1) zu verstehen. Diese Lage der Pressrollen ist durch die Lage des Kolbens relativ zum Zylinder der Zylinder-Kolben-Einheit bestimmt. Der Abstand wird zwischen dem Umfang der Pressrollen und dem inneren Umfang der Pressform gemessen.

Der Speicher 502 kann auf drei Arten beeinflusst werden:

a) mit einer Eingabe 511 kann von Hand der, z.B. beim Einstellen der Würfelpresse, beobachtete oder gemessene Wert des Null-Abstandes eingegeben werden.

b) Durch Impulse für die Kompensation der Abnützung von Pressrollen und Pressform kann der im Speicher 502 aufgespeicherte Wert geändert werden. Die Impulse kommen über ein UND-Glied, das einerseits vom Ausgang 514 der Pressensteuerung 501 ein Signal erhält, solange die Würfelpresse im Betrieb ist, und anderseits von einem Zeitimpuls-Geber 515 Impulse erhält, deren Rhythmus mit Hilfe einer Einstellvorrichtung 510 gewählt werden kann. Der Rhythmus wird entsprechend der zu erwartenden Verschleissintensität des zu bearbeitenden Produktes gewählt.

c) Durch Schliessen eines während des normalen Betriebes offenen Arbeitskontaktes 519 kann der jeweilige Wert der Anzeige 507 der Ist-Lage der Pressrollen im Speicher 502 aufgenommen werden. Dies geschieht z.B. bei der unten beschriebenen automatischen Messung der Null-Lage mit Hilfe des Programmspeichers 504.

Die im Speicher 502 gespeicherte Null-Lage wird einem Addierer 521 zugeleitet, der über einem im normalen Betrieb geschlossenen Arbeitskontakt 523 auch den Wert des Soll-Abstandes aus der Anzeige 509 erhält. Der Addierer 521 errechnet die Soll-Lage der Pressrollen und führt sie auf einen Subtrahierer 525 der aus der Anzeige 507 auch den Wert der Ist-Lage der Pressrollen erhält.

Das Ergebnis des Subtrahierers 525 wird dem Null-Vergleicher 527 zugeführt, der dem Lageregler 47 über den Eingang 50 dieses Ergebnis je nachdem als positive oder negative Impulse zustellt.

Es wäre auch möglich, wie oben bei der Beschreibung der Fig. 3 angedeutet, vom Subtrahierer 525 direkt auf den Lageregler 47 zu gehen, der dann intern den Vergleichsoll-Wert/Ist-Wert besorgt.

Der Programmspeicher 503 kann mit einer Programm-Eingabe 531 programmiert werden, um einen Zeitablauf der Abstände der Pressrollen zu bestimmen, wenn die Pressensteuerung 501 nach einer Ueberlastung des Antriebmotores den Betrieb der Würfelpresse (oder wenigstens deren Speisung) unterbrochen hat. Der beim normalen Betrieb der Würfelpresse gesperrte Ausgang des Programmspeichers 503 ist mit dem Addierer 521 zur Berechnung der Soll-Lage der Pressrollen verbunden. Nach dem erwähnten Betriebsunterbruch gibt die Pressensteuerung 501 bei ihrem Ausgang 535 ein Signal, das den Arbeitskontakt 523 über ein ODER-Glied 537 öffnet. Dieses Signal und die Impulse aus einem raschen Taktgeber 537 wirken auf ein UND-Glied, das die Impulse zur Steuerung des Ablaufs des gespeicherten Programms im Programmspeicher 503 und ihre Weitergabe an den Addierer 521 veranlasst. Das Signal aus dem Ausgang 535 bleibt während einer Dauer bestehen, die den Ablauf des Programms gewährleistet.

Die Zylinder-Kolbeneinheit 31 ist mit einem Sensor 543 versehen, der den Druck des Druckmediums auf der Kolbenseite misst, die zur Annäherung der Pressrollen zur Pressform dient. Der Sensor 543 gibt ein dem Druck entsprechendes elektrisches Signal an einen Vergleicher 545, auf welchen eine Eingabe 547 für einen maximal zulässigen Druck wirkt. Beim Ueberschreiten dieses Druckes gibt der Vergleicher 545 einen Impuls auf ein UND-Glied 549, das auch das Signal vom Ausgang 535 der Pressensteuerung 501 erhält. Das UND-Glied 549 kann den Impuls aus dem Vergleicher 545 dem Programmspeicher 503 zuleiten, um den Ablauf des Programmes zu stoppen und den Programmspeicher 503 unter Ausschaltung des Effektes der Impulse aus dem UND-Glied zurückzustellen. Alternativ könnte das Ausgangssignal des Vergleichers 545 auch an Stelle der Steuerung 501' zum Erkennen der Überlastung der Presse benützt und der Steuerung 501 zum Initiieren des Programmes über deren Ausgang 535 zugeleitet werden.

Selbstverständlich kann an Stelle des Sensors 543 für den Fluiddruck im Zylinder 31 auch jeder andere Druckaufnehmer für den Pressrollendruck verwendet werden, beispielsweise ein piezoelektrischer Druckmesser am Pressrollenlager oder an der Kolbenstange des Zylinders 31.

In der dargestellten Ausführung gemäss Fig. 8 ist auch ein UND-Glied 551 an den Ausgang 535 der Pressensteuerung 501 und an den Ausgang des Vergleichers 545 angeschlossen. Es leitet den Impuls aus den Vergleicher 545 dem Eingang 553 der Pressensteuerung 501 zu, um das Wiederanfahren der Würfelpresse ohne Oeffnen der Pressentüre für die Reinigung des Pressraumes zu verhindern.

Der Programmspeicher 504 kann mit einer Programmeingabe 561 programmiert werden, um den Ablauf der Abstände der Pressrollen zu steuern, damit die Null-Lage der Pressrollen festgehalten werden kann. Der im normalen Betrieb gesperrte Ausgang des Programmspeichers 504 ist mit dem Addierer 521 zur Berechnung der Soll-Lage der Pressrollen verbunden. Beim Schliessen eines an einer Klemme 563 angeschlossene Druckknopfschalters 565 wird über dem ODER-Glied 537 der Arbeitskontakt 523 geöffnet. Am Druckknopf-Schalter 565 ist ein UND-Glied 567 und an einem schnellen Taktgeber 567 ist ein UND-Glied 569 angeschlossen, der zum Programmspeicher 504 die Impulse zur Steuerung des Ablaufes des gespeicherten Programmes und zur Zuleitung der entsprechenden Werte an den Addierer 521 durchlassen kann. Der Programmspeicher 504 ist mit dem Ausgang des Vergleichers 545 verbunden, dessen Steuerimpuls den Ablauf des Programms beendet und den Programmspeicher 504 zurückstellt. Ein UND-Glied 571 ist am Druckknopfschalter 565 und an der Ausgangsseite des Vergleichers 545 verbunden. Er leitet den Steuerimpuls aus dem Vergleicher 545 zur Schliessung des Arbeitskontaktes 519 weiter.

Die Funktion der Steuerung ist folgende:

Beim Formwechseln wird die Null-Lage der Pressrollen gemessen und von Hand in die Eingabe 511 eingegeben. Entsprechend der zu erwartenden Rate der Abnützung von Pressrollen und Pressform wird bei der Einstellvorrichtung 516 der Rhythmus des Zeitimpulsgebers 515 gewählt. Beim normalen Betrieb der Presse wird das UND-Glied 513 vom Signal aus dem Ausgang 514 der Pressensteuerung ständig beaufschlagt und überträgt die Impulse aus dem Zeitimpuls-Geber 515 auf den Speicher 502, wo die gespeicherte Null-Lage somit entsprechend der Betriebsdauer verändert wird. Die Null-Lage aus dem Speicher 502 und der von der Pressensteuerung 501 berechnete und bei der Anzeige 509 angezeigte Soll-Abstand der Pressrollen zur Pressform werden dem Addierer 521 zugeleitet, der die Soll-Lage der Pressrollen berechnet. Diese berechnete Soll-Lage und die Ist-Lage aus der Anzeige 507 werden dem Subtrahierer 525 zugeleitet, der die Abweichung von der Soll-Lage mit den entsprechenden Zeichen auf den Null-Vergleicher 527 weitergibt. Dieser gibt die notwendigen Steuerimpulse mit den gewünschten Vorzeichen dem Lageregler 47 weiter.

Findet eine Ueberlastung statt, die zum Stillegen der Würfelpresse bzw. ihrer Speisung durch die Pressensteuerung 501 führt, dann gibt die Pressensteuerung 501 an ihrem Ausgange 535 ein Signal ab, dessen Dauer so gewählt ist, dass der Ablauf des ganzen nachstehend beschriebenen Prüfprogrammes gewährleistet ist. Das Signal aus dem Ausgang 535 öffnet über das ODER-Glied 537 den Arbeitskontakt 523, der die Verbindung zwischen der Anzeige 509 des Soll-Abstandes und den Addierer 521 unterbricht. Gleichzeitig werden die Impulse des raschen Taktgebers 539 über das UND-Glied 541 dem Programmspeicher 503 zugeleitet, dessen Ausgang entsperrt wird, und dessen Programm entsprechend dem gegebenen Takt abläuft. Damit erhält der Addierer 521 den Wert des Soll-Abstandes aus dem Programmspeicher 503. Zunächst gibt das Programm eine Erhöhung des Abstandes an. Dann befiehlt das Programm eine Verstellung der Pressrollen bis zum Null-Abstand.

Sollte die Pressform noch mit Produkt bedeckt sein, dann erhöht sich beim Auftreffen der Pressrollen auf das Produkt der vom Sensor 543 an der Zylinder-Kolben-Einheit 31 gemessene Druck, der rasch über den bei der Eingabe 547 eingegebenen maximalen Druck steigt. Dieser Druck entspricht einer bestimmten Pressenbelastung, die gleich oder verschieden von derjenigen sein kann, bei der die Pressenspeisung unterbrochen wird, doch ist es zweckmässig, wenn diese beiden Belastungswerte wenigstens annähernd gleich sind.

Der Vergleicher 545 gibt über das UND-Glied 549 einen Impuls an den Programmspeicher 503, um den Ablauf des Programms zu unterbinden. Gleichzeitig wird dieser Impuls über das UND-Glied 551 dem Eingang 553 der Pressensteuerung 501 übertragen, damit diese Pressensteuerung 501 das Wiederanfahren der Würfelpresse verbietet. Gleichzeitig gibt die Pressensteuerung 501 die Meldung, dass die Presse geöffnet und gereinigt werden muss. Wenn die Pressform nach der Betriebs- bzw. Speisungsunterbrechung sauber geblieben ist, dann kann das Programm des Programmspeichers 503 unbehindert bis zum Erreichen des Null-Abstandes ablaufen. Nach Ablauf der Dauer des Signals am Ausgang 535 der Pressensteuerung 501 wird die Anzeige 509 des Soll-Abstandes wieder mit dem Addierer 529 verbunden, während der Programmspeicher 503 durch nicht dargestellte Mittel (z.B. über eine mit dem Ausgang 535 verbundene an einem Reset-Eingang des Speichers 503 liegende Kippstufe) in seine Ausgangslage zurückgestellt wird. In diesem Fall braucht die Presse nicht geöffnet werden.

Statt die Null- Lage von Hand über die Eingabe 511 einzugeben, ist es möglich, mit Hilfe des Programmspeichers 504 automatisch vorzugehen. Beim Schliessen des Druckknopf-Schalters 565 wird der Arbeitskontakt 523 über das ODER-Glied 537 geöffnet und die Verbindung zwischen der Anzeige 509 und dem Addierer 521 unterbrochen. Gleichzeitig leitet das UND-Glied 569 die Impulse des schnellen Taktgebers 567 dem Programmspeicher 504 zu und entsperrt dessen Ausgang zum Addierer 521. Das Programm vermindert den Abstand zwischen den Pressrollen und der Pressform. Es sind auch negative Soll-Abstände vorgesehen, für den Fall, dass die Form und die Pressrollen mehr abgenützt sind, als der im Speicher 502 gespeicherte Null-Lage entsprechen würde. Die Bewegung der Pressrollen dauert an, bis sie auf die Pressform auftreffen. Dann steigt augenblicklich der Druck beim Sensor 543 über den bei der Eingabe 547 eingegebenen maximalen Druck und der Vergleicher 545 gibt dem Programmspeicher 504 einen Impuls, der den Ablauf des Programms unterbricht und den Programmspeicher 504 zurückstellt. Gleichzeitig wird der Impuls aus dem Vergleicher 545 über das UND-Glied 571 dem Arbeitskontakt 519 zugeleitet, der kurzzeitig schliesst. Damit wird die IST- Lage der Pressrollen als Null-Lage im Speicher 502 aufgenommen. Diese automatische Messung der Null-Lage ist nicht nur nach einem Formwechsel interessant. Sie kann von Zeit zu Zeit benützt werden, um die aufgrund der zu erwartenden Abnützung berechneten Null-Lage im Speicher 502 zu kontrollieren. Damit sieht man, ob der Rhythmus bei der Einstellvorrichtung 516 richtig gewählt worden ist oder korrigiert werden muss.

In einer Variante könnte statt dem Zeitimpulsgeber 515, ein Impulsgeber verwendet werden, der in Funktion der zu verarbeitenden Produktmenge gesteuert wird. Als Mass für diese Produktmenge könnte die Summe der Wägungen vor der Presse benützt werden, oder die Summe der Umdrehungen der Zufuhrschnecke zum Pressmischer dienen. Die so erhaltenen Werte könnten noch mit einem Koeffizient multipliziert werden, um den je nach Produkt entstehenden Verschleiss pro verarbeiteter Gewichtseinheit zu berücksichtigen. Eine weitere Variante könnte darin bestehen, dass der Ausgang der Eingabestufe 516 für den Wert der Abnützung pro Betriebszeiteinheit (worunter auch die Abnützung pro produzierter Pelletmenge verstanden werden soll) statt mit dem Zeitimpuls-Geber 515 unmittelbar mit dem Lageregler 47 verbunden ist und diesem das Ausmass der pro Betriebszeiteinheit durchzuführenden Lagekorrektur der Pressrolle mitteilt. In diesem Falle kann beispielsweise das Ausgangssignal des Zeitimpuls-Gebers 515 einem Zähler eingegeben werden, der bei Erhalt einer bestimmten Anzahl von Impulsen die Lagekorrektur auslöst.

In jedem Falle aber versteht es sich, dass der Einsteller 516 -in weitestem Sinne - einen Speicher für den eingegebenen spezifischen Abnützungswert darstellt, der für ein bestimmtes zu verpressendes Rohmaterial einmal empirisch ermittelt werden kann und dann stets zur Verfügung steht. Es mag dabei zweckmässig sein, den Lageregler 47 mit einem Handeinsteller in der Weise auszubilden, dass Lagekorrekturen auch von Hand aus eingegeben werden können, beispielsweise durch wiederholtes Schliessen jeweils eines Schalters für die Bewegung der Pressrolle (vgl. 20) zur Form (vgl. 21) oder von dieser weg (der z.B. über einen Differenzierkondensator mit einem Monoflop verbunden ist, so dass pro Schalterbetätigung ein Impuls definierter Dauer erhalten wird), wobei jede Schalterbetätigung zu einer Schrittbewegung der Pressrolle in der einen oder anderen Richtung führt.

## Patentansprüche

1. Würfelpresse mit einer mit Pressbohrungen (22, 322, 422) versehener Pressform (21, 221, 321, 421) und mit wenigstens einer Pressrolle (20, 220, 320, 420), die das zwischen ihnen und der Pressform (21, 221, 321, 421) erfasste Produkt durch die Bohrungen (22, 422) hindurch presst, und mit einer Verstellvorrichtung (31, 231, 331, 431) für das Einstellen des Abstandes zwischen Pressrolle (20, 220, 320, 420) und Pressform (21, 221, 321, 421), wobei die Verstellvorrichtung (31, 231, 331, 431) zweckmässig mit einem Lageregler (47) zur Lageregelung der Pressrolle (20, 220, 320, 420) zusammenarbeitet, dadurch gekennzeichnet, dass die Verstelleinrichtung, vorzugsweise eine fluidische, insbesondere hydraulische, Zylinder-Kolben-Einheit (31, 231, 331, 431), mindestens eine Zuleitung (34) aufweist, die über die Tragwelle (33) für wenigstens eine Pressrolle (20, 220, 320, 420) geführt ist bzw. sind.

2. Würfelpresse nach Anspruch 1, dadurch gekennzeichnet, dass die Zylinder-Kolben-Einheit (31, 231, 331, 431) die Verstellvorrichtung (31, 231, 331, 431) eines Regelkreises mit einer Lagemessvorrichtung (38-45; 238, 239, 253, 279; 491, 492) zur Lageregelung der Pressrolle (20, 220, 320, 420) ist.

3. Würfelpresse nach Anspruch 2, dadurch gekennzeichnet, dass die Lagemessvorrichtung (38-45; 238, 239, 253, 279; 491, 492) des Lagereglers (47) als Teil der den gesamten Pressrollenhub durchführenden stufenlosen Verstellvorrichtung (31, 231, 331, 431) ausgebildet ist,
und dass vorzugsweise die Lagemessvorrichtung (38, 39, 45, 230, 270, 491, 492) eine sich parallel zur Kolbenstange der Zylinder Kolben-Einheit (31, 221, 321, 421) sich erstreckende Messstange (38; 238; 491) aufweist
und/oder
die Lagemessvorrichtung (38, 39, 45, 230, 270) wenigstens zum Teil innerhalb der Zylinder-Kolben-Einheit (31, 221, 321) untergebracht ist,
dass bevorzugt die Vorrichtung zur Lageregelung ein Regulierventil (55, 255) aufweist mit einer Soll-Werteingabe (50) für die Lage des Kolbens (40, 240, 440) und mit einer Rückführung (46) für den Ist-Wert der Lage des Kolbens (40, 240, 440), wobei das Regulierventil (55, 255) die Zylinder-Kolbeneinheit (31, 231, 331, 431) je nach dem Sinn des Unterschieds zwischen Ist-Wert und Soll-Wert beaufschlagt,
dass insbesondere das Regulierventil (255) am Zylinder (237) der Zylinder-Kolben-Einheit (231) angebaut ist,
dass zweckmässig für jede Pressrolle (220, 320, 420) eine Kolben-Zylinder-Einheit (231, 331, 431) vorhanden ist,
und dass gegebenenfalls die Kolben-Zylinder-Einheit (31, 231, 331) an einem Exzenterbolzen (25) zur Lagerung und Verstellung der Pressrolle (20, 220, 320) angreift.

4. Würfelpresse nach Anspruch 1, 2 oder 3, dadurch gekennzeichnet, dass der Kolben (40, 240, 340, 440) doppeltwirkend und somit von seinen beiden Seiten her durch Druckfluid belastbar ist.

5. Würfelpresse nach einem der Ansprüche 1 bis 4, dadurch gekennzeichnet, dass die Verstellvorrichtung, insbesondere die Soll-Werteingabe (50) des Regulierventils, an die Maschinenregelung (49) angeschlossen ist, wobei die Pressrollenverstellung durch wenigstens einen Parameter der Maschinenregelung, wie Motorbelastung, Würfelqualität gesteuert ist.

6. Würfelpresse nach einem der Ansprüche 1 bis 5, dadurch gekennzeichnet, dass die Verstellvorrichtung (31, 231, 431) am Pressrollenträger (23, 423), innerhalb des Arbeitsraumes der Presse angeordnet ist.

7. Würfelpresse nach einem der Ansprüche 1 bis 6, dadurch gekennzeichnet, dass die Verstellvorrichtung (331) an der Türe (381), ausserhalb des Arbeitsraumes der Presse angeordnet ist.

8. Würfelpresse nach einem der Ansprüche 1 bis 7, dadurch gekennzeichnet, dass jede der Pressrollen (220) jeweils von einer ihr zugeordneten Zylinder-Kolben-Einheit (231, 331, 431) betätigbar ist, deren eines Ende an einem ortsfesten Teil, insbesondere dem Rollenträger (23), befestigt ist, wogegen das andere Ende, insbesondere die Kolbenstange (241), an einem Verstellhebel (230) für die zugeordnete Pressrolle (220) angreift.

9. Würfelpresse nach einem der Ansprüche 1 bis 8, dadurch gekennzeichnet, dass der Zylinder-Kolben-Einheit (31, 231, 331, 431) eine nach dem Verstellen der zugeordneten Pressrolle (20, 220, 320, 420) eine Absperrorgan zum Sperren der Rolle in der Soll-Lage, insbesondere ein in eine Absperrstellung bringbares Mehrwegeventil (55; 255), aufweist.

10. Würfelpresse nach einem der Ansprüche 1 bis 9, dadurch gekennzeichnet, dass die Zylinder-Kolben-Einheit (31, 231, 331, 431) an einem Ende an einem Verstellhebel (30; 230) angreift, der über einen Mehrkantkopf (29; 229) mit der Lagerung (24, 27) einer Pressrolle (20; 220) verbunden ist.

## Claims

1. Pellet press comprising a press die (21, 221, 321, 421) provided with press bores (22, 322, 422) and at least one press roller (20, 220, 320, 420) which presses the product engaged between it and the press die (21, 221, 321, 421) through the bores (22, 422), and an adjusting device (31, 231, 331, 431) for the adjustment of the spacing between the press roller (20, 220, 320, 420) and the press die (21, 221, 321, 421), with the adjustment device (31, 231, 331, 431), expediently cooperating with a position regulator (47) for the positional regulation of the press roller (20, 220, 320, 420) characterized in that the adjustment device, which is preferably a fluidic, in particular a hydraulic piston in cylinder unit (31, 231, 331, 431) has at least one feedline (34) which is or are led via the carrier shaft (33) for at least one press roller (20, 220, 320, 420).

2. Pellet press in accordance with claim 1, characterized in that the piston and cylinder unit (31, 231, 331, 431) is the adjustment device (31, 231, 331, 431) of a regulating circuit with a position measuring device (38-45; 238, 239, 253, 279; 491, 492) for the position regulation of the press roller (20, 220, 320, 420).

3. Pellet press in accordance with claim 2, characterized in that the position measuring device (38-45; 238, 239, 253, 279; 491, 492) of the position regulator (47) is formed as part of the stepless adjustment device (31, 231, 331, 431)
which carries out the entire press roller stroke; and in that, preferably, the position measuring device (38, 39, 45, 230, 270, 491, 492) has a measurement rod (38; 238; 491) which extends parallel to the piston rod of the piston and cylinder unit (31, 221, 321, 421) and/or
the position measuring device (38, 39, 45, 230, 270) is at least partly accomodated within the piston in cylinder unit (31, 221, 321);
in that, preferably, the apparatus for the positional regulation has a regulating valve (55, 255) with a desired value input (50) for the position of the piston (40, 240, 440) and with a feedback (46) for the actual value of the position of the piston (40, 240, 440), wherein a regulating valve (55, 255) charges the piston in cylinder unit (31, 231, 331, 431) depending on the sense of the difference between the actual value and the desired value;
in that the regulating valve (255) is in particular mounted on the cylinder (237) of the piston and cylinder unit (231);
in that a piston in cylinder unit (231, 331, 431) is expediently provided for each press roller (220, 320, 420);
and in that the piston in cylinder unit (31, 231, 331) optionally acts on an eccentric pin (25) for the journalling and adjustment of the press roller (20, 220, 320).

4. Pellet press in accordance with claim 1, 2 or 3, characterized in that the piston (40, 240, 340, 440) is double-acting and can thus be loaded by pressure fluid from both of its sides.

5. Pellet press in accordance with one of the claims 1 to 4, characterized in that the adjustment device, in particular the desired value input (50) of the regulating valve is connected to the machine regulation (49), with the press roller adjustment being controlled by at least one parameter of the machine regulation such as motor load, pellet quality.

6. Pellet press in accordance with one of the claims 1 to 5, characterized in that the adjustment device (31, 231, 431) is arranged on the press roller carrier (23, 423) within the working space of the press.

7. Pellet press in accordance with one of the claims 1 to 6, characterized in that the adjustment device (331) is arranged on the door (381), outside of the working space of the press.

8. Pellet press in accordance with one of the claims 1 to 7, characterized in that each of the press rollers (220) can be respectively actuated by a piston in cylinder unit (231, 331, 431) associated with it, or one end of which is secured to a stationary part, in particular to the roller carrier (23), whereas the other end, in particular the piston rod (241) acts on an adjustment lever (230) for the associated press roller (220).

9. Pellet press in accordance with one of the claims 1 to 8, characterized in that the piston in cylinder unit (31, 231, 331, 431) has a blocking member for blocking the roller in the desired position after adjustment of the associated press roller (20, 220, 320, 420), in particular a multi-way valve (55; 255) which can be brought into a blocking position.

10. Pellet press in accordance with one of the claims 1 to 9, characterized in that the piston in cylinder unit (31, 231, 331, 431) acts at one end on an adjustment lever (30; 230) which is connected via a polygonal head (29; 229) with the mounting (24, 27) of a press roller (20; 220).

## Revendications

1. Presse de granulation, comportant une forme de presse (21,221,321,421) pourvue de perçages de presse (22,322,422) et avec au moins un rouleau de pressage (20,220,320,420), qui fait passer sous pression le produit saisit, entre lui et la forme de presse (21,221,321,421), et avec un dispositif de réglage (31,231,331,431) pour le réglage de l'écartement entre rouleau de pressage (20,220,320,420) et forme de pressage (21,221,321,421), le dispositif de réglage (31,231,331,431) coopérant de manière approprié avec un régulateur de position (47), en vue d'assurer une régulation de la position du rouleau de pressage (20,220,320,420), caractérisée en ce que le dispositif de réglage, de préférence un ensemble à piston et cylindre (31,231,331,431) à fluide, en particulier hydraulique, présente au moins une conduite d'amenée (34) qui est (sont) passée(s) par par l'arbre support (33), pour au mins un rouleau de pressage (20,220,320,420).

2. Presse de granulation selon la revendication 1, caractérisée en ce que l'ensemble à piston et cylindre (31,231,331,431) est le dispositif de réglage (31,231,331,431) d'un circuit de réglage, avec un dispositif de mesure de position (38 à 45;238,239,253,279;491,492) en vue d'assurer la régulation de position du rouleau de pressage (20,220,320,420).

3. Presse de granulation selon la revendication 2, caractérisée en ce que le dispositif de mesure de position (38 à 45;238,239,253,279;491,492) du régulateur de position (47) est réalisée comme une partie du dispositif de réglage (31,231,331,431)
à action continue qui parcourt la totalité de la course du rouleau de pressage et que de préférence le dispositif de mesure de position (38, 39, 45, 230, 270, 491, 492) présente une tige de mesure (38;238;491), qui s'étend parallèlement à la tige de piston de l'ensemble à piston et cylindre (31,231,331,431)
et /ou
le dispositif de mesure de position (38,39,45,230,270) est logé au moins en partie à l'intérieur de l'ensemble à piston et cylindre (31,221,321),
que, de préférence, le dispositif de régulation de position présente une soupape de régulation (5,255), avec une introduction de valeur de consigne (50), pour la position du piston (40,240,440) et avec une voie de retour (46) pour la valeur réelle de la position du piston (40,240,440), la soupape de régulation (55,255) sollicitant l'ensemble à piston et cylindre (31,231,331,431) suivant le sens de la différence entre valeur réelle et valeur de consigne,
qu'en particulier la soupape de régulation (255) est montée sur le cylindre (237) de l'ensemble à piston et cylindre (231 ),
que, de manière appropriée, il y a un ensemble à piston et cylindre (231,331,431) pour chaque rouleau de pressage (220,320,420),
et que, le cas échéant, l'ensemble à piston et cylindre (31,231,331) agit sur une tige excentrique (25), pour assurer le positionnement et le réglage du rouleau de pressage (20, 220, 320)..

4. Presse de granulation selon la revendication 1, 2 ou 3, caractérisée en ce que le piston (40,240,340,440) est à double action et peut ainsi être sollicité des deux côtés par du fluide sous pression.

5. Presse de granulation selon l'une des revendications 1 à 4, caractérisée en ce que le dispositif de réglage, en particulier l'introduction de valeur de consigne (50) de la soupape de régulation, est raccordé à la régulation machine (49), le déplacement de réglage de rouleau de pressage étant commandé par au moins un paramètre de la régulation machine, tel que la charge moteur, la qualité du granulat.

6. Presse de granulation selon l'une des revendications 1 à 5, caractérisée en ce que le dispositif de réglage (31,231,431) est disposé sur le support de rouleau de pressage (23,423), à l'intérieur de l'enceinte de travail de la presse.

7. Presse de granulation selon l'une des revendications 1 à 6, caractérisée en ce que le dispositif de réglage (331) est disposé sur les portes (381), à l'extérieur de l'enceinte de travail de la presse.

8. Presse de granulation selon l'une des revendications 1 à 7, caractérisée en ce que chacun des rouleaux de pressage (220) est actionnable individuellement par un ensemble à piston et cylindre (31,331,431) lui étant associé, dont une extrémité est fixée sur une partie localement fixe, en particulier le support de rouleau (23), alors que l'autre extrémité, en particulier la tige de piston (241) agit sur un levier de réglage (230) pour le rouleau de pressage (220) associé.

9. Presse de granulation selon l'une des revendications 1 à 8, caractérisée en ce que l'ensemble à piston et cylindre (31,231,331,441) présente un organe d'isolement, en particulier une soupape multi-voies (55;255), susceptible d'être placée en position d'isolation, qui sert à bloquer le rouleau de pressage (20,220,320,420) en position de consigne, après avoir effectué le déplacement de réglage du rouleau de pressage (20,220,320,420) associé.

10. Presse de granulation selon l'une des revendications 1 à 9, caractérisée en ce que l'ensemble à piston et cylindre ( 31, 231, 331 ) agit à une extrémité sur un levier de réglage (30;230), qui est relié au palier de rotation (24,27) d'un rouleau de pressage (20;220), par l'intermédiaire d'une tête multi-pans (29;229).

Fig:1

Fig:7

Fig: 2

Fig. 3A

Fig 3

Fig 5

Fig. 3 B

Fig: 4

Fig: 6

Fig.8